# EUROPÄISCHE PATENTSCHRIFT

(11) **EP 1 882 154 B1**
(45) Veröffentlichungstag und Bekanntmachung des Hinweises auf die Patenterteilung: **23.01.2019**
(21) Anmeldenummer: 06724619.9
(22) Anmeldetag: 27.04.2006
(51) Int. Cl.: G01B 11/02

(54) **AUTOMATISCHES BELICHTUNGSSYSTEM FÜR EIN BERÜHRUNGSLOS MESSENDES AUTOMOBILSERVICEGERÄT**
AUTOMATIC ILLUMINATING SYSTEM FOR A CONTACTLESSLY MEASURING AUTOMOBILE SERVICE DEVICE
SYSTEME D'ECLAIRAGE AUTOMATIQUE D'UN APPAREIL D'ENTRETIEN DE VEHICULES AUTOMOBILES PERMETTANT UNE MESURE SANS CONTACT

(30) Priorität: 17.05.2005 DE 102005022565
(43) Veröffentlichungstag der Anmeldung: 30.01.2008
(73) Patentinhaber: Beissbarth GmbH, 80993 München (DE)
(72) Erfinder: BUX, Hermann, 86559 Adelzhausen (DE); BICHLMEIER, Ulrich, 84453 Mühldorf a. Inn (DE); SCHOMMER, Stefan, 85716 Unterschleissheim (DE)
(74) Vertreter: Schmitt-Nilson Schraud Waibel Wohlfrom Patentanwälte Partnerschaft mbB
(86) Internationale Anmeldenummer: PCT/EP2006/003941
(87) Internationale Veröffentlichungsnummer: WO 2006/122640

(56) Entgegenhaltungen:
- WO-A2-2004/059575
- US-A- 5 018 853
- US-A1- 2005 060 899

## Beschreibung

Automatisches Beleuchtungs- und Bildaufnahmesystem für ein Automobilservicegerät, kombinierte Beleuchtungs- und Bildaufnahmeeinheit sowie Verfahren zur automatischen meßwertabhängigen Bildaufnahme- und Belichtungseinstellung für ein berührungslos messendes Automobilservicegerät.
Aus der Patentanmeldung DE 10 2004 013 441.3 ist ein Meßverfahren, ein Meßgerät sowie eine Fahrwerksvermessungseinrichlung zur Bestimmung der räumlichen Lage einer Radfelge bekannt. Diese Patentanmeldung beschreibt einen Algorithmus zur Schmiegetorusmodellierung für die berührungslose Fahrwerksvermessung. Bei solchen berührungslos arbeitenden Fahrwerksvermessungseinrichtungen werden Bilder eines Rades oder einer Radfelge ermittelt und ausgewertet, um die durch das Felgenhorn aufgespannte Radebene zu bestimmen.

WO 2004/059575 A2 offenbart eine Vorrichtung zur optischen Fahrwerksvermessung mit Kameras und Beleuchtungsvorrichtungen. Die Intensität der Beleuchtung ist einstellbar. Dies ermöglicht es, die Intensität der Beleuchtung so einzustellen, dass die Intensität der von den Kameras aufgenommenen Bilder in einem gewünschten Bereich liegt.

Die Einstellung der Beleuchtung durch die Beleuchtungseinheiten und der Belichtung der optischen Empfangseinheiten erfolgt dabei durch einen Benutzer oder basiert auf allgemein gültigen Annahmen und Verfahren.
Bei diesem Verfahren sowie bei diesen Fahrwerksvermessungmeßgeräten und -einrichtungen ist von Nachteil, dass bei unzureichenden Beleuchtungsverhältnissen und Belichtungseinstellungen die ermittelten Ergebnisse nicht zufriedenstellend sind.
Es ist daher Aufgabe der vorliegenden Erfindung, ein automatisches Beleuchtungs- und Bildaufnahmesystem sowie ein Verfahren hierfür bereitzustellen, bei dem die Beleuchtung der besonders relevanten Bereiche des betrachteten Objekts sowie die Bildqualität der optischen Empfangseinheit verbessert werden Dadurch sollen die bei der berührungslosen Fahrwerksvermessung ermittelten Ergebnisse verbessert werden.
Diese Aufgabe wird durch den Gegenstand der unabhängigen Patentansprüche gelöst. Vorteilhafte Weiterbildungen ergeben sich aus den abhängigen Ansprüchen.
Ein automatisches Beleuchtungs- und Bildaufnahmesystem für ein Automobilservicegerät, insbesondere für ein berührunglos messendes Automobilservicegerät oder Fahrwerksvermessungssystem, umfasst wenigstens eine optische Empfangseinheit mit einer Schnittstelle zu einer Steuereinheit, wenigstens eine Beleuchtungseinheit mit einem Steuereingang sowie eine Steuereinheit, die mit einer Schnittstelle zu der optischen Empfangseinheit bzw. zu den optischen Empfangseinheiten, mit einer Schnittstelle zu der Beleuchtungseinheit bzw. zu den Beleuchungseinheiten, mit einer Bildverarbeitungs- bzw. Bildvorverarbeitungseinheit und mit einer Auswerteeinheit ausgestattet ist. Die Bildverarbeitungs- bzw. Bildvorverarbeitungseinheit erhält Bilder von der optischen Empfangseinheit bzw. von den optischen Empfangseinheiten und ermittelt für den Anwendungsfall spezifische Merkmale des Bildes bzw. der Bilder. Die Auswerteeinheit erzeugt Steuerparameter für die Beleuchtungseinheit(en) und/oder für die optische(n) Empfangseinheit(en) aus den Bildern der optischen Empfangseinheit(en) und aus den ermittelten spezifischen Merkmalen.

Gemäß einem Grundgedanken der Erfindung basiert dieses automatische Beleuchtungs- und Bildaufnahmesystem nicht auf festen benutzervorgegebenen Annahmen und Einstellungen, sondern auf einer ergebnisspezifischen lokalen Betrachtung der erzeugten Bilder. Dabei geht die Erfindung von der Erkenntnis aus, dass die Beleuchtung und die Anpassung der Beleuchtung an die Erfordernisse der Bildverarbeitung der entscheidende Faktor neben der Algorithmik in der berührungslosen Fahrwerkvermessung ist.

Die von der Bildverarbeitungs- bzw. Bildvorverarbeitungseinheit ermittelten spezifischen Merkmale des Bildes können dabei in üblicher dem Fachmann bekannter Weise und insbesondere entsprechend der in der eingangs erwähnten deutschen Patentanmeldung beschriebenen Bildverarbeitung und Bildvorverarbeitung erzeugt werden. Die ermittelten spezifischen Merkmale des Bildes beziehen sich somit auf die sachlichen Gegebenheiten des beschriebenen Anwendungsbereiches bzw. der Meßaufgabe, beispielsweise der Felge, der Radhauskante, des Ventils oder eines Emblems.

Die lokale Belichtungsbewertung ist eine Gütebewertung der betrachteten Bildbereiche und kann bereits ein Teilergebnis der Bildverarbeitung bzw. der Bildvorverarbeitung sein. Die von der Auswerteeinheit erzeugten Steuerparameter können sowohl für die optische Empfangseinheit als auch für die Beleuchtungseinheit generiert werden. Die Belichtungssteuerung optimiert dabei den interessierenden Bildbereich unabhängig vom übrigen Bild und verbessert somit das Berechnungsergebnis, das wiederum Grundlage für die Belichtungssteuerung ist.

Aus praktischen Gründen kann ein dynamischer Grenzwert festgelegt werden, der die ständige Nachparametrisierung innerhalb seiner Grenzen hält oder unterbindet.

Gemäß einer ersten Ausführungsform des automatischen Beleuchtungs- und Bildaufnahmesystems kann die optische Empfangseinheit als CMOS- oder CCD-Kamera ausgebildet sein und eine Elektronik, integrierte Gehäusekomponenten, ein ggf. nicht mit fester Brennweite ausgestattetes Objektiv, einen Filter zur Optimierung eines IR-Nutzsignals bezüglich des IR-Spektrums der Sonne und zum Ausblenden des Umlichts, insbesondere einen Bandpassfilter und eine Stromversorgung umfassen. Die integrierten Gehäusekomponenten können dabei sowohl als Integration des Gehäuses in die Anordnung als auch als Integration der Anordnung in das Gehäuse verstanden werden.

Die Beleuchtungseinheit kann dabei für eine Beleuchtung im sichtbaren und unsichtbaren, insbesondere im IR-Bereich ausgelegt sein. Sie kann auch als LED-Beleuchtung ausgebildet sein.

Je nach Platzverhältnissen oder Beleuchtungserfordernissen können entweder genau eine entweder flächige oder punktförmige Einzelbeleuchtungseinheit oder mehrere Beleuchtungseinheiten vorgesehen werden. Diese können als jeweils zwei Beleuchtungseinheiten in unterschiedlicher Ausrichtung ausgebildet sein, was auch als Stereoanordnung bezeichnet wird, oder ringförmig um die optische Empfangseinheit herum angeordnet sein, was eine besonders gleichmäßige Ausleuchtung des zu betrachtenden Objekts ergibt.

Wenn die Beleuchtungseinheit(en) zusammen mit der optischen Empfangseinheit angeordnet ist/sind oder mit dieser integriert in einem Gehäuse vorliegt(en), so ergibt sich ein besonders kompakter und platzsparender Aufbau. Alternativ dazu ist es selbstverständlich möglich, die Beleuchtungseinheiten separat von der optischen Empfangseinheit aufzustellen.

Bei der von der Bildverarbeitungs- bzw. Bildvorverarbeitunaseinheit vorgenommenen Bildverarbeitung kommen Merkmale aus der Bildverarbeitung, insbesondere der Felgenrand, die Radhauskante, die Aufstandsfläche, die Ventilposition, die Radmuttern, das Wuchtgewicht, ein Emblem an der Felge oder ein Schriftzug am Reifen zum Einsatz.

Die Bildverarbeitungs- bzw. Bildvorverarbeitungseinheit und die Auswerteeinheit können dabei einen Bildbereich für das Erzeugen der Steuerparameter dynamisch auswählen.

Diese dynamische Auswahl erfolgt, indem der gesamte Bildbereich oder ein Teilbereich des Bildes, beispielsweise ein ¼ oder ein 1/8 Bildbereich auf markante geometrische Formen überprüft wird und insbesondere zum Auffinden konzentrischer Kreise grob vorsegmentiert wird, indem der auszuwertende Bildbereich, insbesondere im Bereich von Kreisen, von Kreissegmenten zwischen Reifen und Felge und von Umfangslinien der Kreise festgelegt wird und indem daraus Steuerparameter für den festgelegten Bildbereich bestimmt werden.

Wahlweise können dabei Teile des Bildbereiches ausgeblendet werden, um so die Beleuchtung in besonders relevanten Bereichen, insbesondere in den obersten und untersten bzw. vordersten und hintersten Felgenbereichen zu optimieren.

Mit den so erzeugten Steuerparametern können die Einstellungen der optischen Empfangseinheit und der Beleuchtungseinheit an die Erfordernisse der Bildverarbeitung angepasst werden. Des Weiteren können die zu betrachtenden Bildbereiche individuell eingestellt werden. Dadurch ergibt sich eine deutliche Verbesserung der durch das Automobilservicegerät ermittelten Ergebnisse.

Gemäß einer vorteilhaften Weiterbildung der Erfindung können die Auswahl des Bildbereichs und/oder die Einstellung der Beleuchtungseinheit(en) und/oder der optischen Empfangseinheit(en) in einem weiteren Durchlauf verändert werden. Durch Vergleich der Ergebnisse von zwei oder mehr verschiedenen Testläufen bei unveränderter Position des Objekts, der Beleuchtungseinheiten und der optischen Empfangseinheiten und jeweils veränderten Einstellungen der Beleuchtungseinheiten und der optischen Empfangseinheiten, können die Einstellungen der Beleuchtungseinheiten und der optischen Empfangseinheiten optimiert werden.

Falls keine Steuerparameter für den festgelegten Bildbereich bestimmt worden sind oder falls diese unzureichend sind, sollte die Auswahl des Bildbereiches mit anderen Grundeinstellungen der Beleuchtungseinheiten und der optischen Empfangseinheiten in jedem Fall wiederholt werden.
Bei den Steuerparametern für die Beleuchtungseinheiten handelt es sich um die Beleuchtungsdauer und um die Beleuchtungsstärke. Bei den Steuerparametern für die optischen Empfangseinheiten handelt es sich um die Belichtungszeit und/oder um die Blenden- und Objektiveinstellung, was aufwendige Kameras mit gesonderter Kalibrierung erfordert, und/oder um die Filtereinstellungen.
Die Erfindung betrifft auch eine kombinierte Beleuchtungs- und Bildaufnahmeeinheit mit einer integrierten Kamera und mit einer Vielzahl von um die integrierte Kamera herum angeordneten Lichtquellen, die in die gleiche Richtung weisen wie die integrierte Kamera. Die Lichtquellen können dabei als LED's vorliegen, wodurch sich eine besonders gleichmäßige Ausleuchtung des zu betrachtenden Objekts und ein besonders kompakter und platzsparender Aufbau ergibt.
Die Erfindung betrifft weiterhin ein Verfahren zur automatischen, messwertabhängigen Bildaufnahme- und Belichtungseinstellung für ein berührungslos messendes Automobilservicegerät oder Fahrwerkvermessungssystem wie in Anspruch 1 definiert.

Mit diesem erfindungsgemäßen Verfahren zur automatischen meßwertabhängigen Beleuchtungs- und Belichtungseinstellung können die Ergebnisse der berührungslosen Fahrwerksvermessung deutlich verbessert werden. Dieses Verfahren basiert auf einer ergebnisspezifischen, lokalen Bildbetrachtung und vermeidet die Nachteile von Beleuchtungs- und Belichtungsregelungen, die auf Benutzerangaben oder auf allgemeinen Schätzwerten beruhen.

Erfindungsgemäß erfolgt das Ermitteln der spezifischen Merkmale des Bildes bzw. der Bilder des Objekts durch Überprüfen des gesamten Bildbereichs oder eines Teilbildbereichs auf markante geometrische Formen und insbesondere durch grobe Vorsegmentierung zum Auffinden konzentrischer Kreise, durch Festlegen der auszuwertenden Bildbereiche, insbesondere im Bereich von Kreisen, von Kreissegmenten zwischen Reifen und Felge und von Umfangslinien der Kreise; und durch optionales Ausblenden von Teilen von Bildbereichen zur Optimierung der Beleuchtung in besonders relevanten Bereichen, insbesondere in obersten und untersten bzw. vordersten und hintersten Felgenbereichen.
Wie bereits oben beschrieben, können die vorgenannten Verfahrensschritte mit veränderten Einstellungen der Beleuchtungseinheiten und/oder der optischen Empfangseinheiten und/oder für andere Bildbereiche wiederholt werden, um die ermittelten Ergebnisse weiter zu verbessern. Wenn sich beispielsweise bei dem letzten Durchlauf der Verfahrensschritte, bei dem die Blendenöffnung vergrößert und/oder die Belichtungszeit verlängert und/oder die Beleuchtungsstärke vergrößert worden ist, die Ergebnisse gegenüber dem vorletzten Durchlauf der Verfahrensschritte verbessert haben, so ist dies ein Hinweis darauf, dass man beispielsweise eine weitere Vergrößerung der Blendenöffnung, Verlängerung der Belichtungszeit und Erhöhung der Beleuchtungsstärke vornehmen könnte.
Haben sich die Ergebnisse hingegen verschlechtert, so sollte die Blendenöffnung wieder verringert und/oder die wieder Belichtungszeit verkürzt und/oder die Beleuchtungsstärke wieder vermindert werden.
Falls keine oder nur unzureichende Steuerparameter für den festgelegten Bildbereich bestimmt worden sind, sollten die Verfahrensschritte in jedem Fall wiederholt werden.

Die Steuerparameter können vorteiihafterweise entsprechend festgelegter Gütekriterien bestimmt werden.

Die Erfindung ist nachfolgend anhand eines Ausführungsbeispiel mit Bezug auf die Figuren näher veranschaulicht.
- Figur 1: zeigt einen Meßplatz, auf dem ein Kraftfahrzeug mit vier Rädern steht, dessen Fahrwerk vermessen werden soll;
- Figur 2: zeigt einen weiteren Meßplatz mit dem Kraftfahrzeug aus Figur 1; und
- Figur 3: zeigt eine Vorderansicht von zwei nebeneinander angeordneten, kombinierten Beleuchtungs- und Bildaufnahmeeinheiten.

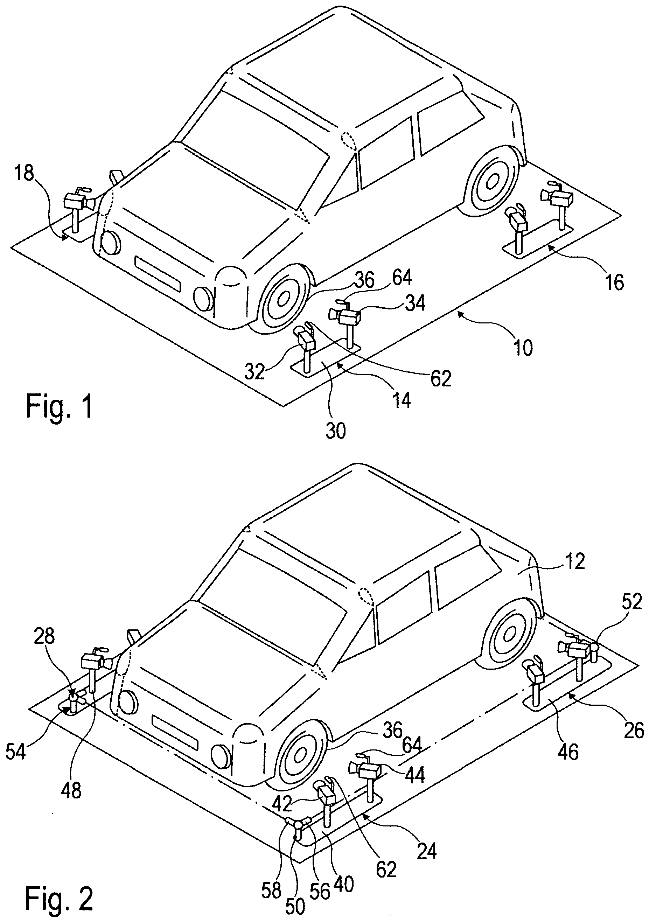

Figur 1 zeigt einen Meßplatz 10, auf dem ein Kraftfahrzeug 12 mit vier Rädern 36 steht, dessen Fahrwerk vermessen werden soll. Auf dem Meßplatz 10 sind vier Meßgeräte ortsfest angeordnet, von denen drei Meßgeräte 14, 16, 18 gezeigt sind, während das vierte Meßgerät durch das Kraftfahrzeug verdeckt ist.

Figur 2 zeigt einen weiteren Meßplatz 20 mit dem Kraftfahrzeug 12, wobei wiederum drei Meßgeräte 24, 26, 28 gezeigt sind, während das vierte Meßgerät durch das Kraftfahrzeug verdeckt ist.

Die Meßgeräte 14, 16, 18 umfassen jeweils eine Bodenplatte 30 und zwei Kameras 32, 34, die unter unterschiedlichen Winkeln auf das zugehörige Rad 36 des Kraftfahrzeugs 12 gerichtet sind. Die zwei Kameras 32, 34 verfügen über jeweils eine Lichtquelle 62, 64, die das Rad 36 beleuchten.

Die zwei Kameras 32, 34 sowie die zwei Lichtquellen 62, 64 weisen jeweils in den Figuren 1 und 2 nicht gezeigte Schnittstellen auf, an denen in den Figuren 1 und 2 ebenfalls nicht gezeigte Leitungen ansetzen, welche die zwei Kameras 32, 34 sowie die zwei Lichtquellen 62, 64 mit einem ebenfalls nicht gezeigten Computersystem verbinden. Das Computersystem kann auch drahtlos (Funk-Datenübertragung) mit dem Messsystem verbunden werden.

Das Computersystem umfasst eine Büdverarbeitungs- und Büdvorverarbeitungseinheit, die in der Lage ist, die aufgenommenen Bilder der zwei Kameras 32, 34 zu empfangen und aus diesen Bildern für den Anwendungsfall spezifische Merkmale der Bilder zu ermitteln. Dies ist dem Fachmann bspw. aus der Patentanmeldung DE 10 2004 013 441.3 bekannt und braucht nicht weiter erläutert zu werden.

Das Computersystem umfasst des weiteren eine Auswerteeinheit, die in der Lage ist Steuerparameter für die zwei Lichtquellen 62, 64 sowie für die zwei Kameras 32, 34 zu erzeugen, und zwar aus den aufgenommenen Bildern der zwei Kameras 32, 34 und aus den von der Bildverarbeitungs- bzw. Bildvorverarbeitungseinheit ermittelten spezifischen Merkmalen.

Bei den Steuerparametern für die zwei Lichtquellen 62, 64 handelt es sich um die Beleuchtungsdauer und um die Beleuchtungsstärke; bei den Steuerparametern für die zwei Kameras 32, 34 handelt es sich im wesentlichen um die Belichtungszeit. Des weiteren können bei aufwendigeren Kameras auch die Blendeneinstellung, die Objektiveinstellung, die Fokuseinstellung oder evtl. vorgesehene Filter gesteuert werden.

Bei dem Ausführungsbeispiel von Figur 1 sind die Meßgeräte 14, 16, 18 fest auf dem Meßplatz 10 montiert, wobei die relativen Winkellagen der Meßgeräte untereinander sowie deren Abstände bei der Montage festgestellt werden und dann unverändert bleiben.

Bei dem Ausführungsbeispiel von Figur 2 weisen die Meßgeräte 24, 26, 28 wiederum eine Bodenplatte 40 und zwei Kameras 42, 44 mit jeweils einer Lichtquelle 62, 64 auf, die unter unterschiedlichen Winkeln auf das zugehörige Rad 36 gerichtet sind. Auf den Grundplatten 40, 46, 48 der Meßgeräte 24, 26, 28 sind Bezugsystem-Meßköpfe 50, 52, 54 vorgesehen, die eine optische Vermessung der relativen Winkellagen und der Abstände der Meßgeräte 24, 26, 28 (und des durch das Kraftfahrzeug 12 verdeckten Meßgeräts) gestatten. Dazu hat jeder Meßkopf, wie beispielsweise der Meßkopf 50, zwei Sende/Empfangseinheiten 56, 58, die zu dem in Längsrichtung des Fahrzeuges gegenüberliegenden Meßkopf beziehungsweise zu den quer zu dem Fahrzeug gegenüberliegenden Meßkopf gerichtet sind. Die Lage und die Abstände der Meßgeräte zueinander werden vom Bezugssystem bestimmt und verrechnet.

Die Kalibrierung dieses Stereo-Meßsystems umfaßt die Kalibrierung der "Inneren Kameraparameter" und die Kalibrierung der Einbausituation der Meßgeräte. Als "innere Parameter" werden alle Parameter bezeichnet, die kameraspezifisch sind, d.h. durch den Zusammenbau der Kamera festgelegt sind. Innere Parameter werden festgelegt durch die Einbaulage des optischen Sensors, das Objektiv und dessen Einbaulage, die Blendeneinstellung und Fokuseinstellung. Bei Zoom-Objektiven ist zudem die eingestellte Brennweite entscheidend. Die inneren Parameter können so lange als konstant angesehen werden, wie keine mechanische Veränderung an der Kamera oder Änderung der Objektiveinstellung vorgenommen wird. Die Parameter werden mit Hilfe von vollständig bekannten Objekten bestimmt. Vorzugsweise derzeit die Kalibrierung mit einem 3D-Objekt, wie z.B. einer mit ausreichend vielen markanten Punkten versehenen Anordnung planarer Targets in verschiedenen Raumlagen.

Die Kalibrierung der Einbausituation beim Zusammenbau zweier Kameras in einem Meßgerät zu einem Stereo-Meßsystem muss bezogen auf das Koordinatensystem des Meßgeräts erfolgen. Dazu werden an dem Meßgerät entsprechende Steckachsen, Anlageflächen und/oder Indexstifte vorgesehen, bezüglich denen sowohl das eingebaute Bezugsmeßsystem als auch das Stereomeßsystem kalibriert werden können. Alternativ kann eine optische Kalibrierung vorgenommen werden.

Die Messung der Bezugssystem-/Referenzsystem-Daten ist mit Ausnahme der Abstandsmessung identisch mit dem Verfahren bei den an sich bekannten Fahrwerkvermessungssystemen. Ergebnisse des Messung des Bezugssystems sind die Lage der einzelner Meßgeräte zueinander, einschließlich Abstand, und die Lage der einzelner Meßgeräte zur Senkrechten. Die Abstandsmessung wird über die Winkelmessung zweier lichtemittierenden Dioden (LED's) mit bekanntem Abstand vorgenommen.

Die Qualität der Beleuchtung des Stereo-Messsystems wird anhand der vorhandenen Meßbilder überprüft. Dabei wird auf ausreichende Segmentierbarkeit, d.h. die Qualität des Kontrasts der Schattengrenze geprüft. Ist keine ausreichende Segmentierbarkeit gegeben, wird die Beleuchtung nachgestellt. Die Qualität bzw. Güte der Beleuchtungseinstellung kann nicht nur von den Kontrastverhältnissen an der Schattengrenze abhängen. Wenn das Ventil oder andere Elemente angemessen werden, können auch andere Kriterien eine Rolle spielen.

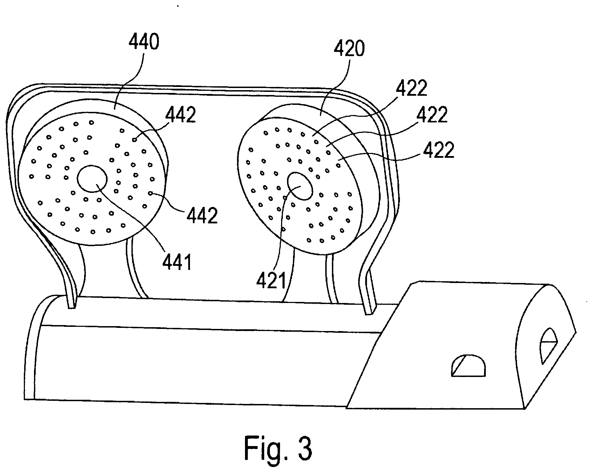

Figur 3 zeigt eine Vorderansicht von zwei nebeneinander angeordneten, kombinierten Beleuchtungs- und Bildaufnahmeeinheiten 420 und 440. Diese weisen jeweils eine im wesentlichen nach vorne gerichtete Fläche auf, in deren Mitte jeweils integrierte Kameras 421 und 441 angeordnet sind. Um die integrierten Kameras 421 und 441 herum sind eine Anzahl von Leuchtdioden LED's 422 und 442 angeordnet, die in die gleiche Richtung wie die integrierten Kameras 421 und 441 zeigen, nämlich gemäß der Darstellung in Figur 3 nach vorne.
Die kombinierten Beleuchtungs- und Bildaufnahmeeinheiten 420 und 440 haben eine kompakte Bauform. In dem Ausführungsbeispiel gemäß Figur 3 sind für jede der beiden kombinierten Beleuchtungs- und Bildaufnahmeeinheiten 420 und 440 jeweils eine Vielzahl von LED's 422 und 442 vorgesehen.
Durch eine Belichtungssteuerung dieser LED's 422 und 442 kann die Beleuchtungsstärke genau eingestellt und individuell an die Meßbedürfnisse angepasst werden.
Die kombinierten Beleuchtungs- und Bildaufnahmeeinheiten 420 und 440 sind in Fig. 3 auf einer Halterung angeordnet, in der auch die Leitungen für die Datenübertragung der integrierten Kameras 421 und 441 sowie die Steuer- und die Stromversorgungsleitungen für die integrierten Kameras 421 und 441 und die LED's 422 und 442 verlaufen.
Das Verfahren zur automatischen, messwertabhängigen Bildaufnahme- und Belichtungseinstellung für die Meßplätze 10 und 20 ist nachfolgend im Einzelnen beschrieben:
Zunächst werden die Lichtquellen 62 und 64 angeschaltet und mit einer vorgegebenen Beleuchtungsstärke betrieben. Bei Verwendung der kombinierten Beleuchtungs- und Bildaufnahmeeinheiten 420 und 440 wird eine vorbestimmte Anzahl von LED's 422 und 442 eingeschaltet.
Dann wird durch die Kameras 32, 34 bzw. 42, 44 bzw. 421, 441 ein Bild des Rads 36 aufgenommen und an die Bildverarbeitungs- bzw. Bildvorverarbeitunngseinheit übermittelt, die aus dem Bild in dem Fachmann bekannter Weise spezifische Merkmale bestimmt.

Anschließend erzeugt die Auswerteeinheit Steuerparameter für die Kameras 32, 34 bzw. 42, 44, bzw. 421, 441 sowie für die Lichtquellen 62, 64 bzw. für die LED's 422, 442. Dementsprechend werden die Steuerparameter Beleuchtungsdauer und Beleuchtungsstärke, sowie Belichtungszeit, Objektiveinstellung, Blendenfokus und Filtereinstellungen verändert; und die vorangegangenen Verfahrensschritte werden für die veränderten Steuerparameter wiederholt.

Die jeweils neu erzeugten spezifischen Merkmale werden mit den vorangegangenen spezifischen Merkmalen verglichen, dadurch läßt sich die Qualität des aufgenommenen Bildes beurteilen, beispielsweise durch Punkteverteilungen etc.. Ferner kann basierend auf dem Vergleich der zuletzt und davor ermittelten spezifischen Merkmale und Steuerparameter entschieden werden, ob eine weitere Veränderung der Steuerparameter vorzunehmen ist, oder ob die Steuerparameter wie beim jeweils letzten Durchlauf der Verfahrensschritte belassen werden.

Durch dieses Verfahren können die Ergebnisse der berührungslosen Fahrwerksvermessung deutlich verbessert werden, zumal eine optimale Ausleuchtung des Objekts, in diesem Falle des Rads 36 gewährleistet ist.

Die Entscheidung darüber, ob die erzeugten Steuerparameter zufriedenstellend sind, oder ob die Steuerparameter verändert werden müssen, sowie die Entscheidung darüber, in welche Richtung und um welchen Betrag die Steuerparameter geändert werden müssen, erfolgen anhand von Gütekriterien, welche beispielsweise die spezifischen Merkmale und deren umliegenden Bildpunkte betreffen. Des Weiteren können diese Entscheidungen anhand der Stabilität oder anhand von Variationen der spezifischen Merkmale und der Steuerparameter erfolgen.

Hierbei ist auch eine iterative Steuerung anhand der ermittelten spezifischen Merkmale und der Steuerparameter möglich, die beispielsweise die Steuerparameter in die entgegengesetzte Richtung nachjustiert, wenn festgestellt wird, dass sich eine Verschlechterung der Qualität der spezifischen Merkmale ergeben hat.

Aus praktischen Gründen kann ein dynamischer Grenzwert festgelegt werden, der die ständige Nachparametrisierung innerhalb seiner Grenzen erlaubt oder unterbindet.

Ebenso ist es möglich, dass die Veränderung der Steuerparameter durch Benutzereingriff erfolgt.

## Patentansprüche

1. Verfahren zur automatischen, messwertabhängigen Bildaufnahme- und Belichtungseinstellung für ein berührungslos messendes Automobilservicegerät oder Fahrwerkvermessungssystem mit den folgenden Schritten:
Ausrichten von jeweils zwei Kameras (32, 34; 42, 44; 421, 441) unter unterschiedlichen Winkeln auf das zugehörige Rad (36) eines Kraftfahrzeugs (12);
Betreiben der jeder Kamera (32, 34; 42, 44; 421, 441) zugeordneten Beleuchtungseinheit (62, 64; 422, 442) mit einer vorgegebenen Beleuchtungsstärke;
Aufnehmen wenigstens eines Bildes des Rads (36) oder einer Radfelge davon durch die jeweils zwei Kameras (32, 34; 42, 44; 421, 441);
Übertragen des Bildes bzw. der Bilder des Rads (36) oder der Radfelge an eine Bildverarbeitungs- bzw. Bildvorverarbeitungseinheit;
Ermitteln von spezifischen Merkmalen des Bilds bzw. der Bilder des Rads (36) oder der Radfelge durch die Bildverarbeitungs- bzw. Bildvorverarbeitungseinheit unter Verwendung einer Bildverarbeitung und Bildvorverarbeitung, durch Überprüfen des gesamten Bildbereichs oder eines Teilbildbereichs auf markante geometrische Formen und durch grobe Vorsegmentierung zum Auffinden konzentrischer Kreise, und durch Festlegen der auszuwertenden Bildbereiche im Bereich von Kreisen, von Kreissegmenten zwischen Reifen und Felge und von Umfangslinien der Kreise;
Erzeugen von Steuerparametern für die Beleuchtungseinheiten (62, 64; 422, 442) und/oder für die Kameras (32, 34; 42, 44; 421, 441) aus dem Bild bzw. den Bildern und aus den spezifischen Merkmalen; und
Steuern der Beleuchtungseinheiten (62, 64; 422, 442) und/oder der Kameras (32, 34; 42, 44; 421, 441) mit den Steuerparametern.

2. Verfahren nach Anspruch 1,
**dadurch gekennzeichnet, dass**
zum Ermitteln der spezifischen Merkmalen des Bilds bzw. der Bilder des Rads (36) oder der Radfelge Teile von Bildbereichen zur Optimierung der Beleuchtung in besonders relevanten Bereichen, insbesondere in den obersten und untersten bzw. vordersten und hintersten Felgenbereichen ausgeblendet werden.

3. Verfahren nach Anspruch 1 oder 2,
**dadurch gekennzeichnet, dass**
die Verfahrensschritte mit veränderten Einstellungen der Beleuchtungseinheiten (62, 64; 422, 442) und/oder der Kameras (32, 34; 42, 44; 421, 441) und/oder für einen anderen Bildbereich wiederholt werden.

4. Verfahren nach einem der Ansprüche 1 bis 3,
**dadurch gekennzeichnet, dass**
die Steuerparameter entsprechend festgelegter Gütekriterien bestimmt werden.

5. Automatisches Beleuchtungs- und Bildaufnahmesystem für ein berührungslos messendes Automobilservicegerät oder Fahrwerkvermessungssystem, das die folgenden Merkmale aufweist:
wenigstens zwei unter unterschiedlichen Winkeln auf ein jeweils zugehöriges Rad (36) eines Kraftfahrzeugs (12) gerichtete Kameras (32, 34; 42, 44; 421, 441) mit Schnittstellen zu einer Steuereinheit;
wenigstens eine jeder Kamera (32, 34; 42, 44; 421, 441) zugeordnete Beleuchtungseinheit (62, 64; 422, 442) mit einem Steuereingang; und
eine Steuereinheit:
mit einer Schnittstelle zu den Kameras (32, 34; 42, 44; 421, 441);
mit einer Schnittstelle zu den Beleuchtungseinheiten (62, 64; 422, 442);
mit einer Bildverarbeitungs- bzw. Bildvorverarbeitungseinheit, die so ausgebildet ist, dass sie Bilder der Kameras (32, 34; 42, 44; 421, 441) erhält und dass sie spezifische Merkmale des Bildes unter Verwendung einer Bildverarbeitung und Bildvorverarbeitung ermittelt, und dass für das Erzeugen von Steuerparametern ein Bildbereich dynamisch auswählbar ist, indem der gesamte Bildbereich auf markante geometrische Formen überprüfbar und der gesamte Bildbereich zum Auffinden konzentrischer Kreise grob vorsegmentierbar ist, und indem der auszuwertende Bildbereich im Bereich von Kreisen, von Kreissegmenten zwischen Reifen und Felge und von Umfangslinien der Kreise festlegbar ist, und
mit einer Auswerteeinheit, die so ausgebildet ist, dass sie Steuerparameter für die Beleuchtungseinheiten (62, 64; 422, 442) und/oder für die Kameras (32, 34; 42, 44; 421, 441) aus den Bildern der Kameras (32, 34; 42, 44; 421, 441) und aus den von der Bildverarbeitungs- bzw. Bildvorverarbeitungseinheit ermittelten spezifischen Merkmalen erzeugt.

6. Automatisches Beleuchtungs- und Bildaufnahmesystem nach Anspruch 5,
**dadurch gekennzeichnet, dass**
die Kamera (32, 34; 42, 44; 421, 441) als CMOS- oder CCD-Kamera ausgebildet ist.

7. Automatisches Beleuchtungs- und Bildaufnahmesystem nach Anspruch 5 oder 6,
**dadurch gekennzeichnet, dass**
die Kamera (32, 34; 42, 44; 421, 441) die folgenden Merkmale aufweist:
eine Elektronik;
integrierte Gehäusekomponenten;
ein Objektiv;
einen Filter, insbesondere einen Bandpassfilter zur Optimierung eines IR-Nutzsignals bezüglich des IR-Spektrums der Sonne und zum Ausblenden des
Umlichts; und
eine Stromversorgung.

8. Automatisches Beleuchtungs- und Bildaufnahmesystem nach einem der Ansprüche 5 bis 7,
**dadurch gekennzeichnet, dass**
die Beleuchtungseinheiten (62, 64; 422, 442) so ausgebildet sind, dass sie eine Beleuchtung im sichtbaren oder unsichtbaren, insbesondere IR-Bereich vornehmen.

9. Automatisches Beleuchtungs- und Bildaufnahmesystem nach einem der Ansprüche 5 bis 8,
**dadurch gekennzeichnet, dass**
die Beleuchtungseinheiten als LED-Beleuchtungen (422, 442) ausgebildet sind.

10. Automatisches Beleuchtungs- und Bildaufnahmesystem nach einem der Ansprüche 5 bis 9,
**dadurch gekennzeichnet, dass**
mehrere Beleuchtungseinheiten (422, 442) ringförmig um die optische Empfangseinheit (421, 441) herum angeordnet sind.

11. Automatisches Beleuchtungs- und Bildaufnahmesystem nach einem der Ansprüche 5 bis 10,
**dadurch gekennzeichnet, dass**
die Beleuchtungseinheiten (422, 442) jeweils zusammen mit der Kamera (421, 441) angeordnet sind.

12. Automatisches Beleuchtungs- und Bildaufnahmesystem nach einem der Ansprüche 5 bis 11,
**dadurch gekennzeichnet, dass**
die Bildverarbeitungs- bzw. Bildvorverarbeitungseinheit den Felgenrand, die Radhauskante, die Aufstandsfläche, die Ventilposition, Radmuttern, Wuchtgewicht, Emblem an Felge oder Schrift am Reifen erfasst.

13. Automatisches Beleuchtungs- und Bildaufnahmesystem nach einem der Ansprüche 5 bis 12,
**dadurch gekennzeichnet, dass**
die Bildverarbeitungs- bzw. Bildvorverarbeitungseinheit und/oder die Auswerteeinheit so ausgebildet ist, dass für die dynamische Auswahl des Bildbereichs Teile des Bildbereiches ausblendbar sind zur Optimierung der Beleuchtung in besonders relevanten Bereichen, insbesondere in den obersten und untersten bzw. vordersten und hintersten Felgenbereichen.

14. Automatisches Beleuchtungs- und Bildaufnahmesystem nach einem der Ansprüche 5 bis 13,
**dadurch gekennzeichnet, dass**
die Bildverarbeitungs- bzw. Bildvorverarbeitungseinheit und/oder die Auswerteeinheit so ausgebildet ist, dass für die dynamische Auswahl des Bildbereichs
ein Teilbereich des Bildes, insbesondere ein 1/4- oder ein 1/8-Bildbereich auf markante geometrische Formen überprüfbar ist und zum Auffinden konzentrischer Kreise grob vorsegmentierbar ist;
der auszuwertende Bildbereich, insbesondere im Bereich von Kreisen, von Kreissegmenten zwischen Reifen und Felge und von Umfangslinien der Kreise festlegbar ist;
Teile des Bildbereiches ausblendbar sind zur Optimierung der Beleuchtung in besonders relevanten Bereichen, insbesondere in den obersten und untersten bzw. vordersten und hintersten Felgenbereichen; und
Steuerparameter für den festgelegten Bildbereich bestimmbar sind.

15. Automatisches Beleuchtungs- und Bildaufnahmesystem nach Anspruch 13 oder 14,
**dadurch gekennzeichnet, dass**
die Auswerteeinheit so ausgebildet ist, dass die Auswahl des Bildbereichs mit einer anderen Grundeinstellung der Beleuchtungseinheit(en) und/oder der Kamera(s) wiederholbar ist.

16. Automatisches Beleuchtungs- und Bildaufnahmesystem nach einem der Ansprüche 5 bis 15,
**dadurch gekennzeichnet, dass**
es sich bei den Steuerparametern für die Beleuchtungseinheit(en) (62, 64; 422, 442) um die Beleuchtungsdauer und/oder um die Beleuchtungsstärke handelt.

17. Automatisches Beleuchtungs- und Bildaufnahmesystem nach einem der Ansprüche 5 bis 16,
**dadurch gekennzeichnet, dass**
es sich bei den Steuerparametern für die Kamera(s) (32, 34; 42, 44; 421, 441) um die Belichtungszeit und/oder um die Blendeneinstellung und/oder um die Objektiveinstellung und/oder um die Filtereinstellungen handelt.

## Claims

1. A method for automatic measured-value-dependent image recording setting and exposure setting for an automobile service device or wheel alignment system measuring in a contactless manner, comprising the following steps:
directing two respective cameras (32, 34; 42, 44; 421, 441) under different angles to a corresponding wheel (36) of a motor vehicle (12);
operating the illuminating unit (62, 64; 422, 442) associated with each camera (32, 34; 42, 44; 421, 441) with a predetermined intensity of illumination;
capturing at least one image of the wheel (36) or a wheel rim thereof by the respective two cameras (32, 34; 42, 44; 421, 441);
transmitting the image(s) of the wheel (36) or the wheel rim to an image processing or image pre-processing unit, respectively;
determining specific features of the image(s) of the wheel (36) or the wheel rim by the image processing or image pre-processing unit, respectively, using image processing and image pre-processing, by examining the entire image portion or a partial image portion for significant geometric shapes and by a rough pre-segmentation in order to find concentric circles, and by determining the image portions to be evaluated in the area of circles, of segments of a circle between tire and rim and of circumferential lines of the circles;
generating control parameters for the illuminating units (62, 64; 422, 442) and/or for the cameras (32, 34; 42, 44; 421, 441) from the image(s) and from the specific features; and
controlling the illuminating units (62, 64; 422, 442) and/or the cameras (32, 34; 42, 44; 421, 441) using the control parameters.

2. The method of claim 1,
**characterized in that**, for determining the specific features of the image(s) of the wheel (36) or the wheel rim, parts of image portions are blinded out for optimization of the illumination in particularly relevant portions, especially in the uppermost and lowermost and, respectively, foremost and rearmost rim portions.

3. The method of claim 1 or 2,
**characterized in that** the method steps are repeated with changed settings of the illuminating units (62, 64; 422, 442) and/or the cameras (32, 34; 42, 44; 421, 441) and/or for another image portion.

4. The method of any of claims 1 to 3,
**characterized in that** the control parameters are determined in accordance with fixed quality criteria.

5. An automatic illuminating and image recording system for an automobile service device or wheel alignment system measuring in a contactless manner, the system comprising the following features:
at least two cameras (32, 34; 42, 44; 421, 441) being directed to a respectively associated wheel (36) of a motor vehicle (12) under different angles, said cameras having interfaces to a control unit;
at least one illuminating unit (62, 64; 422, 442) associated with each camera (32, 34; 42, 44; 421, 441), said illuminating unit having a control input; and a control unit:
having an interface to the cameras (32, 34; 42, 44;421, 441);
having an interface to the illuminating units (62, 64; 422, 442);
having an image processing or image pre-processing unit, respectively, configured such that it receives images from the cameras (32, 34; 42, 44; 421, 441) and that it determines specific features of the image using image processing and image pre-processing and that, for generating control parameters, an image portion is dynamically selectable in that the entire image portion can be examined for significant geometric shapes and in that the entire image portion can be roughly pre-segmented in order to find concentric circles, and in that the image portion to be evaluated can be determined in the area of circles, of segments of a circle between tire and rim and of circumferential lines of the circles, and
having an evaluating unit which is configured such that it generates control parameters for the illumination units (62, 64; 422, 442) and/or for the cameras (32, 34; 42, 44; 421, 441) from the images of the cameras (32, 34; 42, 44; 421, 441) and from the specific features determined by the image processing or image pre-processing unit, respectively.

6. The automatic illuminating and image recording system of claim 5, **characterized in that** the camera (32, 34; 42, 44; 421, 441) is in the form of a CMOS or CCD camera.

7. The automatic illuminating and image recording system of claim 5 or 6, **characterized in that** the camera (32, 34; 42, 44; 421, 441) comprises the following features:
an electronics system;
integrated housing components;
a lens system;
a filter, especially a band-pass filter for optimizing an IR useful signal with respect to the IR spectrum of the sun and for blinding out the ambient light; and
a power supply.

8. The automatic illuminating and image recording system of any of claims 5 to 7,
**characterized in that** the illuminating units (62, 64; 422, 442) are configured such that they carry out illumination in the visible or invisible, especially the IR range.

9. The automatic illuminating and image recording system of any of claims 5 to 8,
**characterized in that** the illuminating units are in the form of LED lights (422, 442).

10. The automatic illuminating and image recording system of any of claims 5 to 9,
**characterized in that** a plurality of illuminating units (422, 442) is arranged around the optical receiving unit (421, 441) in an annular manner.

11. The automatic illuminating and image recording system of any of claims 5 to 10,
**characterized in that** the illuminating units (422, 442) are each arranged together with the camera (421, 441).

12. The automatic illuminating and image recording system of any of claims 5 to 11,
**characterized in that** the image processing or image pre-processing unit, respectively, captures the edge of the wheel rim, the wheel house edge, the ground contact area, the valve position, wheel nuts, a balancing weight, an emblem at the rim or writing on the tire.

13. The automatic illuminating and image recording system of any of claims 5 to 12,
**characterized in that** the image processing or image pre-processing unit, respectively, and/or the evaluating unit is configured such that, for dynamic selection of the image portion, parts of the image portion can be blinded out in order to optimize the illumination in particularly relevant portions, especially in the uppermost and lowermost and, respectively, foremost and rearmost rim portions.

14. The automatic illumination and image recording system of any of claims 5 to 13,
**characterized in that** the image processing or image pre-processing unit, respectively, and/or the evaluating unit is/are configured such that, for dynamic selection of the image portion,
a partial region of the image, especially a 1/4 or 1/8 image portion can be examined for significant geometric shapes and can be roughly pre-segmented in order to find concentric circles;
the image portion to be evaluated is determined, especially in the area of circles, of segments of a circle between tire and rim and of circumferential lines of the circles;
parts of the image portion can be blinded out in order to optimize the illumination in particularly relevant portions, especially in the uppermost and lowermost and, respectively, foremost and rearmost rim portions; and
control parameters can be determined for the image portion determined.

15. The automatic illumination and image recording system of claim 13 or 14,
**characterized in that** the evaluating unit is configured such that the selection of the image portion can be repeated with another basic setting of the illuminating unit(s) and/or the camera(s).

16. The automatic illuminating and image recording system of any of claims 5 to 15,
**characterized in that** the control parameters for the illuminating unit(s) (62, 64; 422, 442) are the illuminating duration and/or the intensity of illumination.

17. The automatic illuminating and image recording system of any of claims 5 to 16,
**characterized in that** the control parameters for the camera(s) (32, 34; 42, 44; 421, 441) are the exposure time and/or the diaphragm setting and/or the lens system setting and/or the filter settings.

## Revendications

1. Procédé de réglage automatique de la prise de vue et de l'éclairage, en fonction des valeurs mesurées, d'un appareil d'entretien de véhicules automobiles ou d'un système de contrôle de la géométrie d'un châssis permettant une mesure sans contact, avec les étapes suivantes :
positionnement de deux caméras (32, 34 ; 42, 44 ; 421, 441) selon différents angles au niveau de la roue correspondante (36) d'un véhicule (12) ;
actionnement de l'unité d'éclairage (62, 64 ; 422, 442) associée à chaque caméra (32, 34 ; 42, 44 ; 421, 441) selon l'intensité d'éclairage prédéfinie ;
prise d'au moins une image de la roue (36) ou d'une jante de la roue par les deux caméras correspondantes (32, 34 ; 42, 44 ; 421,441) ;
transmission de la/des image(s) de la roue (36) ou de la jante à une unité de traitement ou de pré-traitement d'images ;
détermination de caractéristiques spécifiques de la/des image(s) de la roue (36) ou de la jante de roue en la/les soumettant à un traitement ou pré-traitement par l'unité de traitement ou de pré-traitement d'images. Il s'agira de contrôler la présence de formes géométriques marquantes dans l'intégralité du champ de l'image ou dans une zone particulière et d'effectuer une pré-segmentation grossière pour y trouver des cercles concentriques, puis de déterminer les zones de l'image à analyser au niveau de cercles, de segments de cercles entre le pneu et la jante et de lignes circonférentielles des cercles ;
génération de paramètres de commande pour les unités d'éclairage (62, 64 ; 422, 442) et/ou pour les caméras (32, 34 ; 42, 44 ; 421, 441) à partir de la/des image(s) et des caractéristiques spécifiques ; et
commande des unités d'éclairage (62, 64 ; 422, 442) et/ou des caméras (32, 34 ; 42, 44 ; 421, 441) selon les paramètres de commande.

2. Procédé selon la revendication 1,
**caractérisé en ce que**,
pour déterminer les caractéristiques spécifiques de la/des image(s) de la roue (36) ou de la jante de roue, les champs d'image sont partiellement occultés afin d'optimiser l'éclairage de zones particulièrement pertinentes, en particulier les zones de jante les plus en haut et les plus en bas ou les plus à l'avant et les plus à l'arrière.

3. Procédé selon la revendication 1 ou 2,
**caractérisé en ce que**,
les étapes du procédé sont répétées avec des réglages modifiés des unités d'éclairage (62, 64 ; 422, 442) et/ou des caméras (32, 34 ; 42, 44 ; 421, 441) et/ou pour une autre zone de l'image.

4. Procédé selon l'une des revendications 1 à 3,
**caractérisé en ce que**,
les paramètres de commande sont définis conformément à des critères de qualité fixés.

5. Système d'éclairage et de prise de vue automatique d'un appareil d'entretien de véhicules automobiles ou d'un système de contrôle de la géométrie d'un châssis permettant une mesure sans contact, présentant les caractéristiques suivantes :
au moins deux caméras (32, 34 ; 42, 44 ; 421, 441) orientées selon différents angles sur une même roue (36) d'un véhicule (12) et dotées d'interfaces vers une unité de commande ;
au moins une unité d'éclairage (62, 64 ; 422, 442) associée à chaque caméra (32, 34 ; 42, 44 ; 421, 441) avec une entrée de commande ; et une unité de commande :
avec une interface vers les caméras (32, 34 ; 42, 44 ; 421, 441) ;
avec une interface vers les unités d'éclairage (62, 64 ; 422, 442) ;
avec une unité de traitement ou de pré-traitement d'images, constituée de telle sorte qu'elle reçoit des images des caméras (32, 34 ; 42, 44 ; 421, 441) et qu'elle détermine des caractéristiques spécifiques de l'image en la soumettant à un traitement et pré-traitement, et qu'une zone de l'image peut être sélectionnée de manière dynamique en vue de générer des paramètres de commande. Pour ce faire, la présence de formes géométriques marquantes doit être contrôlable dans l'intégralité du champ de l'image et le champ de l'image doit pouvoir être soumis dans son intégralité à une pré-segmentation grossière pour y trouver des cercles concentriques, et la zone de l'image à analyser doit pouvoir être définie au niveau de cercles, de segments de cercles entre le pneu et la jante et de lignes circonférentielles des cercles, et
avec une unité d'analyse constituée de telle sorte qu'elle génère des paramètres de commande pour les unités d'éclairage (62, 64 ; 422, 442) et/ou pour les caméras (32, 34 ; 42, 44 ; 421, 441) à partir des images des caméras (32, 34 ; 42, 44 ; 421, 441) et des caractéristiques spécifiques déterminées par l'unité de traitement ou de pré-traitement d'images.

6. Système d'éclairage et de prise de vue automatique selon la revendication 5,
**caractérisé en ce que**,
la caméra (32, 34 ; 42, 44 ; 421, 441) est constituée en tant que caméra CMOS ou CCD.

7. Système d'éclairage et de prise de vue automatique selon la revendication 5 ou 6,
**caractérisé en ce que**,
la caméra (32, 34 ; 42, 44 ; 421, 441) présente les caractéristiques suivantes :
un système électronique ;
des composants de boîtier intégrés ;
un objectif ;
un filtre, en particulier un filtre passe-bande pour l'optimisation d'un signal infrarouge utile relatif au spectre infrarouge du soleil et pour l'occultation de la lumière ambiante ; et
une alimentation électrique.

8. Système d'éclairage et de prise de vue automatique selon l'une des revendications 5 à 7,
**caractérisé en ce que**,
les unités d'éclairage (62, 64 ; 422, 442) sont constituées de telle sorte qu'elles effectuent un éclairage dans le spectre visible ou invisible, en particulier dans le domaine infrarouge.

9. Système d'éclairage et de prise de vue automatique selon l'une des revendications 5 à 8,
**caractérisé en ce que**,
les unités d'éclairage sont constituées d'éclairages LED (422, 442).

10. Système d'éclairage et de prise de vue automatique selon l'une des revendications 5 à 9,
**caractérisé en ce que**,
plusieurs unités d'éclairage (422, 442) sont disposées de manière circulaire autour de l'unité de réception optique (421, 441).

11. Système d'éclairage et de prise de vue automatique selon l'une des revendications 5 à 10,
**caractérisé en ce que**,
les unités d'éclairage (422, 442) sont respectivement disposées avec la caméra correspondante (421, 441).

12. Système d'éclairage et de prise de vue automatique selon l'une des revendications 5 à 11,
**caractérisé en ce que**,
l'unité de traitement ou de pré-traitement d'images saisit le bord de la jante, l'arête du passage de roue, la surface de contact au sol, la position de la valve, les écrous de roue, la masse d'équilibrage, l'emblème de jante ou l'inscription sur le pneu.

13. Système d'éclairage et de prise de vue automatique selon l'une des revendications 5 à 12,
**caractérisé en ce que**,
l'unité de traitement ou de pré-traitement d'images et/ou l'unité d'analyse sont constituées de telle sorte que, pour la sélection dynamique de la zone d'image, le champ de l'image peut être partiellement occulté afin d'optimiser l'éclairage de zones particulièrement pertinentes, en particulier les zones de jante les plus en haut et les plus en bas ou les plus à l'avant et les plus à l'arrière.

14. Système d'éclairage et de prise de vue automatique selon l'une des revendications 5 à 13,
**caractérisé en ce que**,
l'unité de traitement ou de pré-traitement d'images et/ou l'unité d'analyse sont constituées de telle sorte que, pour la sélection dynamique de la zone d'image,
la présence de formes géométriques marquantes peut être contrôlée dans une zone de l'image, en particulier 1/4 ou 1/8 de l'image, et que celle-ci peut être grossièrement pré-segmentée pour y trouver des cercles concentriques ;
la zone d'image à analyser peut être définie, en particulier au niveau de cercles, de segments de cercles entre le pneu et la jante et de lignes circonférentielles des cercles ;
le champ de l'image peut être partiellement occulté afin d'optimiser l'éclairage de zones particulièrement pertinentes, en particulier les zones de jante les plus en haut et les plus en bas ou les plus à l'avant et les plus à l'arrière ; et
des paramètres de commande peuvent être définis pour la zone d'image ciblée.

15. Système d'éclairage et de prise de vue automatique selon la revendication 13 ou 14,
**caractérisé en ce que**,
l'unité d'analyse est constituée de telle sorte que la sélection de la zone d'image peut être répétée avec un autre réglage de base de la/des unité(s) d'éclairage et/ou de la/des caméra(s).

16. Système d'éclairage et de prise de vue automatique selon l'une des revendications 5 à 15,
**caractérisé en ce que**,
les paramètres de commande de la/des unité(s) d'éclairage (62, 64 ; 422, 442) sont la durée d'éclairage et/ou l'intensité d'éclairage.

17. Système d'éclairage et de prise de vue automatique selon l'une des revendications 5 à 16,
**caractérisé en ce que**,
les paramètres de commande de la/des caméra(s) (32, 34 ; 42,44 ; 421, 441) sont la durée d'exposition et/ou l'ouverture et/ou le réglage de l'objectif et/ou les réglages du filtre.
